# EUROPÄISCHE PATENTSCHRIFT

(11) **EP 2 855 113 B1**
(45) Veröffentlichungstag und Bekanntmachung des Hinweises auf die Patenterteilung: **07.04.2021**
(21) Anmeldenummer: 13728936.9
(22) Anmeldetag: 03.05.2013
(51) Int. Cl.: B29C 37/00, B29C 70/54, B29C 70/38

(54) **VERFAHREN ZUM AUFBRINGEN UND FIXIEREN EINER FOLIE AN EINER WERKZEUG- ODER BAUTEILOBERFLÄCHE**
METHOD FOR APPLYING AND FIXING A FILM ON A TOOL OR COMPONENT SURFACE
PROCÉDÉ D'APPLICATION ET DE FIXATION D'UN FILM SUR UNE SURFACE D'UN OUTIL DE MOULAGE OU D'UN ÉLÉMENT

(30) Priorität: 08.05.2012 DE 102012008938
(43) Veröffentlichungstag der Anmeldung: 08.04.2015
(73) Patentinhaber: Premium AEROTEC GmbH, 86179 Augsburg (DE)
(72) Erfinder: LEWERENZ, Tim, 26969 Butjadingen-Sillens (DE); HÄRIG, Carsten, 26197 Grossenkneten (DE); FRERICHS, Nicole, 26122 Oldenburg (DE)
(74) Vertreter: LKGLOBAL Lorenz & Kopf PartG mbB Patentanwälte
(86) Internationale Anmeldenummer: PCT/DE2013/000242
(87) Internationale Veröffentlichungsnummer: WO 2013/167106

(56) Entgegenhaltungen:
- EP-A1- 2 039 493
- EP-A2- 1 410 888
- WO-A2-2008/051629
- DE-A1-102009 029 575
- DE-C1- 19 619 462
- GB-A- 2 310 822
- US-B1- 6 849 150

## Beschreibung

Die vorliegende Erfindung betrifft allgemein den Bereich der Faserverbundtechnologie, d. h. die Herstellung von Faserverbundbauteilen.

Insbesondere betrifft die Erfindung ein Verfahren zum Aufbringen und Fixieren einer Folie an einer Oberfläche eines zur Herstellung eines Faserverbundbauteils eingesetzten Werkzeuges oder einer zur Bildung eines Faserverbundbauteils verwendeten Komponente durch Ablegen der Folie auf die Oberfläche, beispielsweise durch sukzessives Ablegen von Abschnitten der Folie auf die Oberfläche, und Fixieren der abgelegten Folie an der Oberfläche.

Der hier verwendete Begriff "Folie" ist sehr breit zu verstehen und umfasst alle Arten von flächigen Gebilden, die in einem Prozess zur Herstellung eines Faserverbundbauteils verwendet werden können.

So kann es sich bei der Folie beispielsweise um eine (trockene oder mit Matrixmaterial "vorimprägnierte") Fasermateriallage (z. B. Gewebe, Gelege, Geflecht etc.) handeln, welche am Ende des Herstellungsprozesses im fertiggestellten Faserverbundbauteil verbleibt, also eine Komponente dieses Faserverbundbauteils darstellt. Insbesondere kann es sich bei der Folie daher um ein so genanntes "Prepreg" handeln, welches am Ende des Herstellungsprozesses eine Komponente des fertigen Faserverbundbauteils bildet. Ein weiteres Beispiel für eine im fertigen Faserverbundbauteil "verbaute" Folie ist ein Klebefilm, der im Rahmen eines so genannten "Co-Bonding"- bzw. "Co-Curing"-Prozesses zwischen nachfolgend auszuhärtenden Komponenten (z. B. "Prepregs") zwischengefügt wird, um bei der Aushärtung gleichzeitig eine Klebeverbindung der am Klebefilm angrenzenden Komponenten zu bewerkstelligen.

Alternativ kann es sich bei der Folie auch um eine "Funktionslage" handeln, die zwar während des Prozesses der Herstellung des Faserverbundbauteils eingesetzt wird, am Ende jedoch nicht Bestandteil des fertigen Faserverbundbauteils ist. Beispiele hierfür sind z. B. Saugvliese zur Luftentsorgung, so genannte "Vakuumfolien" (Kunststofffolien) in einem vakuumunterstützten Herstellungsprozess (z. B. VAP-Prozess oder dergleichen), oder auch so genannte Abreißfolien bzw. Abreißgewebe, die im Herstellungsprozess zunächst an einer Bauteiloberfläche integriert, am Ende jedoch wieder abgezogen werden, beispielsweise um die betreffende Bauteiloberfläche für eine spätere Endbearbeitung (z. B. Lackierung) aufzurauen.

Die vorstehend genannten Beispiele verdeutlichen die Vielfalt an im Sinne der vorliegenden Erfindung bei einem Prozess zur Herstellung eines Faserverbundbauteils verwendbaren "Folien".

Der technische Ausgangspunkt der Erfindung ist das bereits erwähnte Verfahren bzw. eine Vorrichtung zum Aufbringen und Fixieren einer Folie an einer betreffenden Oberfläche, wobei gemäß einer Ausführungsform ein sukzessives Ablegen von Abschnitten der Folie und ein Fixieren der jeweils abgelegten Abschnitte an der Oberfläche erfolgt. Hierbei kann vorgesehen sein, dass die jeweils abgelegten Folienabschnitte unmittelbar an der Oberfläche fixiert werden, d. h. noch bevor der Ablegeprozess beendet ist (also die gesamte Folie komplett abgelegt ist). Alternativ erfolgt zunächst ein sukzessives Ablegen von Folienabschnitten, bis die komplette Folie abgelegt ist, woraufhin die Fixierung der abgelegten Folie bzw. der abgelegten Folienabschnitte durch entsprechendes elektrostatisches Aufladen der Folie bzw. der Folienabschnitte initiiert wird.

In einer anderen Ausführungsform erfolgt das Ablegen der Folie nicht durch ein sukzessives Ablegen von Folienabschnitten sondern durch ein Ablegen der Folie insgesamt. Mit anderen Worten werden bei dieser Ausführungsform sämtliche auf die Oberfläche abzulegenden Folienabschnitte mehr oder weniger gleichzeitig abgelegt. Bei dieser Ausführungsform kann vorgesehen sein, dass die Fixierung der Folie (durch elektrostatische Aufladung) erst initiiert wird, nachdem die Folie bereits abgelegt wurde. Alternativ oder zusätzlich ist jedoch auch eine Aufladung der Folie möglich, noch bevor diese auf die Oberfläche abgelegt wird.

Unabhängig davon, ob das Ablegen manuell oder automatisiert (z. B. mittels eines so genannten "Tapelegers") erfolgt, ermöglicht das sukzessive Ablegen von Folienabschnitten insbesondere für großflächigere Folien bzw. Oberflächen eine gewünschte Positionierung der Folie an der Oberfläche, wobei mit einem mehr oder weniger sofortigen Fixieren der bereits abgelegten Folienabschnitte vorteilhaft ein nachträgliches Verrutschen dieser Folienabschnitte im weiteren Verlauf des Ablegevorganges vermieden wird.

Diese an sich bekannte Vorgehensweise sei am Beispiel der Aufbringung und Fixierung eines Klebefilms an einer Oberfläche einer zur Bildung eines CFK-Bauteils verwendeten Faserverbund-Komponente erläutert: Zur Verklebung von Faserverbund-Verstärkungsprofilen an einem Faserverbund-Rumpfschalenteil (z. B. eines Flugzeuges) wird gemäß des Stands der Technik oftmals jeweils ein solcher Klebefilm manuell auf jeden Fußabschnitt des Verstärkungsprofils abgelegt und jeweils abgelegte Klebefilmabschnitte mittels Andrücken und/oder leichtem Erwärmen (z. B. mit einem Heißluftföhn oder einem Infrarotstrahler) an diesem Fußbereich fixiert. Aufgrund der oftmals geringen Klebrigkeit derartiger Klebefilme bei Raumtemperatur (z.B. "FM300" der Fa. Cytec) besteht zumeist ein gewisses Problem, den Klebefilm alleine durch mechanisches Andrücken auf den vorgesehenen Oberflächenbereichen der Rumpfschale zu fixieren.

Mehrere in dieser Weise mit einem Klebefilm versehene Verstärkungsprofile werden sodann an den gewünschten Stellen auf die ebenfalls vorgefertigte Rumpfschale (bzw. ein entsprechendes "Prepreg") aufgesetzt. In einem nachfolgenden Co-Bonding- bzw. Co-Curing-Prozess werden die beiden Faserverbundkomponenten, einerseits "Rumpfschale" und andererseits "Verstärkungsprofile" (z.B. spätere Stringer oder Spanten) vollständig ausgehärtet und über die entsprechenden Klebefilme fest miteinander verbunden.

Abgesehen von dem relativ großen Aufwand dieser Methode besteht auch das Problem einer gewissen Unkontrollierbarkeit bzw. schlechten Reproduzierbarkeit des zum Fixieren eingesetzten Erwärmungsvorganges. Außerdem ist eine solche Erwärmung oftmals eigentlich nicht erwünscht, jedoch gängige Praxis, um die Fixierung zu erzielen. Bei manueller Durchführung ist der bekannte Prozess relativ langsam und die Qualitätssicherung ist vor allem hinsichtlich der Temperaturüberwachung beim Erwärmungsprozess problematisch. Unabhängig von dem obigen Beispiel der Aufbringung und Fixierung eines Klebefilms besteht im Stand der Technik bei besonders großflächigen und gekrümmten, insbesondere (im mathematischen Sinn) nicht-abwickelbar gekrümmten Oberfläche eine besondere Schwierigkeit darin, die betreffende Folie möglichst "in einem Arbeitsgang" und möglichst faltenfrei aufzubringen und zu fixieren. Im Stand der Technik zu diesem Zweck manchmal eingesetzte Andruckrollen, z.B. an einem automatischen Tapeleger, führen bei nicht-ebenen bzw. nicht-zylindrischen Oberflächen oftmals zur Gefahr einer Beschädigung der Folie durch die von der Andruckrolle ausgeübten mechanischen Kräfte.

US 6849150 B1 bezieht sich gemäß der Zusammenfassung auf ein System und ein Verfahren zum Formen von Strukturbaugruppen mit 3D-Vorformteilen für gewebte Verbindungen. Das Verfahren bildet komplexe Strukturanordnungen mit vorgeformten Strukturen. Der Klebstoff wird zwischen den vorgeformten Strukturen und den ungehärteten 3D-gewebten textilen Vorformen aufgetragen. Dann werden die vorgeformten Strukturen und das ungehärtete, mit Harz imprägnierte 3D-Textilgewebe mit Wärme und/oder Druck gehärtet, um die größeren komplexen Strukturanordnungen zu bilden.

Es ist daher eine Aufgabe der vorliegenden Erfindung, das Aufbringen und Fixieren einer Folie an einer Oberfläche im Rahmen eines Prozesses zur Herstellung eines Faserverbundbauteils zu vereinfachen bzw. hinsichtlich der Qualität zu verbessern.

Zur Lösung dieser Aufgabe ist ein Verfahren gemäß Anspruch 1 vorgesehen.

Eine Vorrichtung ist offenbart mit einer Fixiervorrichtung, die dazu ausgebildet ist, das Fixieren durch eine elektrostatische Aufladung der Folie zu bewerkstelligen.

Bei der Erfindung wird die Folie aufgrund der Coulomb-Kraft zwischen Folie und betreffender Oberfläche an die Oberfläche gezogen und somit fixiert. Es versteht sich, dass diese Methode eine nicht allzu große elektrische Leitfähigkeit der Folie bzw. der Oberfläche voraussetzt. Dies stellt jedoch für viele in der Faserverbundtechnologie eingesetzte bzw. verarbeitete Materialien kein Problem dar (bzw. kann gegebenenfalls durch entsprechende Materialwahl oder Materialmodifikationen sichergestellt werden).

Durch das elektrostatische Aufladen gemäß der Erfindung wird temporär eine gute Fixierung der Folie auf der betreffenden Oberfläche (Werkzeugoberfläche oder Komponentenoberfläche) gewährleistet, wobei das aus dem Stand der Technik bekannte Andrücken oder leichte Erwärmen (z. B. im Falle eines Klebefilms) vorteilhaft schonender ausgeführt oder ganz entfallen kann.

Insbesondere bei einer manuell über den aufzuladenden Folienabschnitten zu haltenden bzw. zu bewegenden Aufladeeinheit ist eine Strom- bzw. Leistungsbegrenzung der Hochspannungserzeugung vorteilhaft, um eine Gefährdung des Bedieners auszuschließen.

Erfindungsgemäß ist die Folie ein Klebefilm. Nicht erfindungsgemäß kann vorgesehen sein, dass die Folie ein Prepreg, eine Vakuumfolie oder eine andere im Rahmen der Herstellung des Faserverbundbauteils verwendete Funktionslage ist (z. B. Saugvlies, Zwickelfüller, Abreißgewebe etc.).

In einer Ausführungsform besitzt die betreffende Oberfläche eine (im mathematischen Sinn) nicht-abwickelbare Formgestaltung. Insbesondere für derartige kompliziert gekrümmte Formgestaltungen bietet das erfindungsgemäße Verfahren besonders große Vorteile gegenüber den bekannten "mechanischen Andrückmethoden". Es versteht sich, dass die Erfindung jedoch auch für abwickelbare Formgestaltungen der betroffenen Oberfläche Vorteile mit sich bringt.

In einer Ausführungsform handelt es sich bei der Oberfläche um eine Oberfläche einer zur Bildung des betreffenden Faserverbundbauteils (z. B. CFK- oder GFK-Bauteil) verwendeten Komponente, beispielsweise einer trockenen Fasermateriallage (z. B. Gewebe, Geflecht, Gelege etc.) oder einer bereits mit Matrixmaterial (z. B. duroplastischer Kunststoff wie z. B. Epoxidharz) vorimprägnierten Fasermateriallage ("Prepreg").

Insbesondere können mit dem erfindungsgemäßen Verfahren bzw. der erfindungsgemäßen Vorrichtung zur Bildung eines mehrlagigen Faserverbundlaminats eine oder mehrere flächige Komponenten des Faserverbundlaminats, wie z. B. ein oder mehrere flächige Prepregs abgelegt bzw. aufeinandergeschichtet werden.

Ein spezielles, im Rahmen der Erfindung bevorzugtes Anwendungsgebiet ist die Herstellung von flächigen Strukturbauteilen für Fahrzeuge, insbesondere Luftfahrzeuge, wie z. B. Flugzeuge und Hubschrauber.

In einer bevorzugten Ausführungsform handelt es sich bei dem herzustellenden Faserverbundbauteil um ein flächig ausgedehntes Schalenbauteil, insbesondere z. B. ein Fahrzeugrumpfteil mit einer flächigen Ausdehnung von mehr als 5 m², welches beim Herstellungsprozess an wenigstens einer seiner beiden Flachseiten mit mehreren Verstärkungsprofilen (z. B. spätere Stringer und/oder Spanten) verbunden wird. In diesem Fall kann es sich bei der erfindungsgemäß aufgebrachten und fixierten Folie um einen Klebefilm handeln, der zunächst an einer Oberfläche eines Fußbereiches der jeweiligen Verstärkungsprofile aufgebracht und fixiert wird, bevor diese Verstärkungsprofile mit dem Fußbereich auf die genannte Flachseite des Schalenbauteils aufgebracht und mittels des Klebefilms fest daran angebunden wird. Diese (z. B. thermische) Anbindung kann in einem so genannten Co-Bonding- bzw. Co-Curing-Prozess erfolgen, bei welchem zuvor noch nicht oder nicht vollständig ausgehärtete Komponenten, wie z. B. die flächige Komponente und/oder die Verstärkungsprofile, vollständig ausgehärtet werden.

In einer Ausführungsform wird die auf die Oberfläche abzulegende Folie von einer Vorratsrolle abgezogen. In einem automatisierten Verfahren können die Vorratsrolle bzw. Mittel zur Aufnahme einer solchen Vorratsrolle einen Funktionsteil einer automatisch zu betreibenden Vorrichtung ("Tapeleger") sein. Hierbei kann vorgesehen sein, dass die auf die Oberfläche abzulegende Folie in automatisierter Weise mittels einer geeigneten Schneideinrichtung der Vorrichtung, auf die im Einzelfall benötigte Länge geschnitten wird.

Offenbart ist eine Vorrichtung zur Durchführung des beschriebenen Verfahrens. Eine solche Vorrichtung zum Aufbringen und Fixieren einer Folie an einer Oberfläche eines zur Herstellung eines Faserverbundbauteils eingesetzten Werkzeuges oder einer zur Bildung eines Faserverbundbauteils verwendeten Komponente, kann beispielsweise umfassen:
- eine Ablegeeinrichtung zum Ablegen der Folie, insbesondere zum sukzessiven Ablegen von Abschnitten der Folie auf die Oberfläche, und
- eine Fixiereinrichtung zum Fixieren der jeweils abgelegten Abschnitte an der Oberfläche, wobei die Fixiereinrichtung dazu ausgebildet ist, das Fixieren durch eine elektrostatische Aufladung der Folie zu bewerkstelligen.

Die Ablegeeinrichtung und die Fixiereinrichtung können hierbei derart ausgestaltet sein, dass damit einzelne oder mehrere der vorstehend bereits beschriebenen und nachfolgend noch beschriebenen besonderen Verfahrensausgestaltungen realisiert werden können. So kann die Fixiereinrichtung z. B. derart ausgestaltet bzw. betrieben werden, dass im Falle einer sukzessiven Ablage von Folienabschnitten die jeweils bereits abgelegten Folienabschnitte unmittelbar nach ihrer jeweiligen Ablage fixiert werden. Alternativ oder zusätzlich kann jedoch auch eine (gegebenenfalls weitere) Aufladung von Folienabschnitten bzw. der gesamten Folie vorgesehen sein, nachdem der Ablegeprozess bereits beendet ist, d. h. die gesamte Folie bereits abgelegt wurde.

In einer Ausführungsform ist die auf die Oberfläche abzulegende Folie ein vorkonfektionierter Folienzuschnitt.

In einer spezielleren Ausführungsform wird z. B. ein nicht-rechteckiger Folienzuschnitt eines Klebefilms in Anpassung an die Kontur desjenigen Oberflächenbereiches eingesetzt, an welchem der Folienzuschnitt aufzubringen und zu fixieren ist. Beispielsweise kann es sich bei dem Oberflächenbereich um einen bereits erwähnten Fußbereich eines Verstärkungsprofils handeln, welches zusammen mit einem flächig ausgedehnten Schalenbauteil auszuhärten ist (um ein mit einem oder mehreren Verstärkungsprofilen verstärktes Schalenbauteil herzustellen.)

In einer Ausführungsform ist die auf die Oberfläche abzulegende Folie langgestreckt, insbesondere mit einem Länge/Breite-Verhältnis von mindestens 10/1. Im Falle einer über die Länge der Folie variierenden Folienbreite ist als "Breite" der Folie im Sinne der vorstehenden Bemessungsregel die maximale Breite der abzulegenden Folie zu verstehen.

In einer Ausführungsform umfasst die Ablegeeinrichtung der Vorrichtung die bereits erwähnte Vorratsrolle (für das Folienmaterial) und eine automatische Schneideinrichtung zum Abziehen und Abschneiden von Folienabschnitten "passender Länge" von dem Folienvorrat. Abgesehen von einem solchen automatisierten Zuschneiden hinsichtlich der Länge einzelner Folienzuschnitte kommt gemäß einer Weiterbildung in Betracht, mittels der verwendeten Schneideinrichtung auch einen Zuschnitt hinsichtlich der "Konturierung" der einzelnen Folienzuschnitte zu realisieren. Auch in diesem Fall kann die betreffende Vorrichtung z. B. mit quasiendlosem Folienmaterial auf einer Vorratsrolle ausgestattet sein, welches im Betrieb der Vorrichtung in automatisierter Weise vollständig (hinsichtlich Länge und Kontur) konfektioniert wird.

In einer Ausführungsform erfolgt ein sukzessives Ablegen aufeinanderfolgender Abschnitte der Folie und die elektrostatische Aufladung der jeweiligen Folienabschnitte vor deren Ablage auf die Oberfläche. Alternativ oder zusätzlich kann eine solche elektrostatische Aufladung auch erst nach der Ablage der jeweiligen Folienabschnitte auf die Oberfläche erfolgen.

Die elektrostatische Aufladung kann beispielsweise mit einer Aufladespannung im Bereich von 5 kV bis 25 kV vorgesehen sein.

Die von einer Hochspannungsquelle bereitgestellte Aufladespannung kann über eine Leitungsanordnung mit einer kamm- bzw. bürstenartigen Elektrodenanordnung bestehend aus einer Mehrzahl von elektrischen Leiterenden, bevorzugt "Leiterspitzen" verbunden sein, um über diese Leiterenden die betreffenden Folienabschnitte aufzuladen.

Ein elektrischer "Masseanschluss" der Hochspannungsquelle kann über eine elektrische Leitungsverbindung mit einem elektrischen Anschluss im Bereich derjenigen Oberfläche verbunden sein, an welcher die Folie aufzubringen und zu fixieren ist.

Insbesondere bei großflächigeren Oberflächen (z. B. größer als 10 m², insbesondere größer als 20 m²), die eine nicht-abwickelbare Formgestaltung besitzen, kann das bis hierher beschriebene Aufbring- und Fixierverfahren mehrfach ausgeführt werden, um jeweilige (kleinere) Teilbereiche der betreffenden größeren Oberfläche mit jeweiligen Folienstücken (z. B. langgestreckte Folienstreifen) zu bedecken.

Dementsprechend ist gemäß eines weiteren Aspekts der Erfindung ein Verfahren zum Bedecken einer Oberfläche eines zur Herstellung eines Faserverbundbauteils eingesetzten Werkzeuges oder einer zur Bildung eines Faserverbundbauteils verwendeten Komponente durch Aufbringen und Fixieren einer Mehrzahl von Folien an der betreffenden Oberfläche vorgesehen, wobei das jeweilige Aufbringen und Fixieren der jeweiligen Folien (insbesondere z. B. langgestreckte Folienstreifen mit einem Länge/Breite-Verhältnis von mindestens 10/1) jeweils mittels eines Verfahrens der vorstehend beschriebenen Art durchgeführt wird.

Zusammenfassend wird mit der Erfindung eine einfache und zuverlässige Methode sowie eine entsprechende Vorrichtung zum Aufbringen und Fixieren einer Folie im Rahmen eines Prozesses zur Herstellung eines Faserverbundbauteils bereitgestellt. Das Fixieren der Folie, beispielsweise eines Klebefilms, erfolgt mittels Elektrostatik. Das Fixieren der Folie in dieser Weise liefert insbesondere in einer Serienfertigung von Faserverbundbauteilen eine erhebliche Vereinfachung, was z. B. zu einer deutlichen Reduzierung des manuellen Aufwandes führen kann. Des Weiteren kann das Fixieren mittels Elektrostatik in vielen Fällen einfacher automatisiert und in eine Prozesskette integriert werden, als die heute üblichen rein mechanischen Fixiermethoden.

Die Erfindung wird nachfolgend anhand von Ausführungsbeispielen mit Bezug auf die beigefügten Zeichnungen weiter beschrieben. Es stellen jeweils schematisch dar:
- **Fig. 1**: eine Vorrichtung zum Aufbringen und Fixieren einer Folie an einer Oberfläche gemäß eines Ausführungsbeispiels,
- **Fig. 2**: einen Fußbereich eines zur Bildung eines verstärkten Faserverbundbauteils und zu diesem Zweck mit Klebefilmen zu versehenden Verstärkungsprofils, sowie zwei passend vorkonfektionierte Klebefilmzuschnitte, und
- **Fig. 3**: eine Querschnittsansicht eines mit mehreren Verstärkungsprofilen gemäß Fig. 2 verstärkten lattenförmigen Faserverbundbauteils.

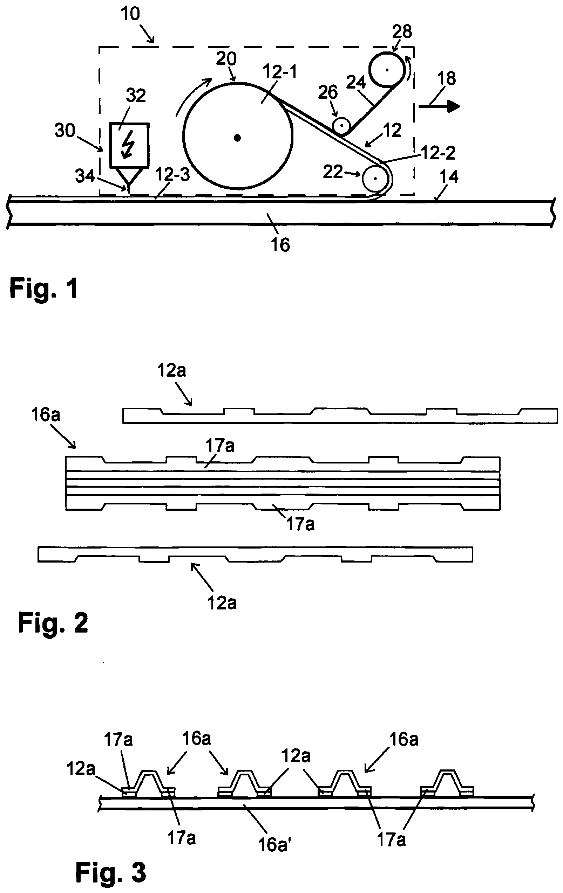

Fig. 1 zeigt eine Vorrichtung 10 zum Aufbringen und Fixieren einer Folie, hier eines Klebefilms 12, an einer Oberfläche 14 einer z. B. bereits teilausgehärteten Faserverbundkomponente 16 (z. B. Prepreg).

Das Aufbring- und Fixierverfahren dient im dargestellten Ausführungsbeispiel zur nachfolgenden Anbindung einer weiteren (in Fig. 1 nicht dargestellten) Faserverbundkomponente, welche in einem finalen Aushärteschritt zusammen mit der dargestellten Faserverbundkomponente 16 vollständig ausgehärtet und mittels des ebenfalls aushärtenden Klebefilms fest mit der anderen Faserverbundkomponente verbunden wird.

Während des Aufbring- und Fixierverfahrens verfährt ein in Fig. 1 gestrichelt umrandeter "Legekopf' der Vorrichtung 10 in automatisierter Weise entlang einer (z. B. rechnergestützt) vorgegebenen Bewegungsbahn entlang der Oberfläche 14, um den Klebefilm 12 (allgemein: eine Folie) dort abzulegen. Die Bewegungsrichtung der Vorrichtung 10 bezüglich der Faserverbundkomponente 16 ist in Fig. 1 durch einen Pfeil 18 symbolisiert. Im Betrieb der Vorrichtung 10 wird der streifenförmige Klebefilm 12 von einer im Legekopf untergebrachten Vorratsrolle 20 abgezogen und über eine Umlenkrolle 22 auf die Oberfläche 14 der Faserverbundkomponente 16 abgelegt.

Im dargestellten Beispiel ist der in Form der Vorratsrolle 20 bevorratete Klebefilm 12 mit einer Trennfolie 24 versehen, welche wie dargestellt mittels einer weiteren Umlenkrolle 26 von dem eigentlichen Klebefilm 12 abgezogen und mittels einer weiteren Rolle 28 (zur Entsorgung) aufgewickelt wird. Im dargestellten Beispiel ist die weitere Umlenkrolle 26 im Verlauf zwischen Vorratsrolle 20 und erster Umlenkrolle 22 angeordnet.

Zu jedem Zeitpunkt des Betriebes der Vorrichtung 10 lassen sich drei Folienabschnitte 12-1, 12-2 und 12-3 der Folie 12 voneinander unterscheiden: Der Folienabschnitt 12-1 befindet sich noch aufgewickelt im Bereich der Vorratsrolle 20, der Folienabschnitt 12-2 ist bereits abgewickelt und von der Trennfolie 24 befreit, jedoch noch nicht auf die Oberfläche 14 abgelegt. Der Folienabschnitt 12-3 ist bereits auf der Oberfläche 14 abgelegt.

Die bis hierher beschriebenen Komponenten der Vorrichtung 10 bilden somit eine Ablegeeinrichtung zum sukzessiven Ablegen von Abschnitten des Klebefilms 12 auf die Oberfläche 14.

Als eine Fixiereinrichtung zum Fixieren der jeweils bereits abgelegten Abschnitte (12-3 in Fig. 1) umfasst die Vorrichtung 10 eine Aufladeeinrichtung 30 umfassend eine Hochspannungsquelle 32 zum Erzeugen einer elektrischen Hochspannung, die an eine kammartige Leiterspitzenanordnung 34 angelegt wird. Diese kammartige bzw. bürstenartige Leiteranordnung 34 ist in direktem Kontakt oder wie dargestellt in einem geringen Abstand an einer Stelle des bereits abgelegten Klebefilmabschnitts 12-3 positioniert, so dass der Klebefilm 12 an dieser Stelle elektrisch aufgeladen wird (z. B. mit einer Aufladespannung von etwa 15 kV).

Durch die elektrostatische Aufladung des Klebefilms 12 werden aufgrund der Coulomb-Kraft zwischen Klebefilm 12 und Faserverbundkomponente 16 die jeweils bereits darauf abgelegten Klebefilmabschnitte 12-3 in einfacher und schonender Weise an der Oberfläche 14 fixiert. Im dargestellten Beispiel erfolgt die Fixierung der jeweiligen Klebefilmabschnitte 12-3 im Wesentlichen unmittelbar nach deren jeweiliger Ablage (Abweichend vom dargestellten Beispiel wäre auch eine Ausgestaltung bzw. ein Betrieb der Vorrichtung 10 denkbar, bei welcher zunächst der Klebefilm 12 komplett aufgetragen (abgelegt) wird, um sodann in einem weiteren Arbeitsgang die Fixierung zu realisieren, etwa durch sukzessives Aufladen von Abschnitten des bereits vollständig abgelegten Klebefilms).

Abweichend vom dargestellten Beispiel könnte die elektrostatische Aufladung alternativ oder zusätzlich z. B. auch an den Abschnitten 12-1 und/oder 12-2 des Klebefilms 12 vorgesehen sein.

Wenngleich bei dem beschriebenen Ausführungsbeispiel ein Klebefilm 12 als Beispiel für eine gemäß der Erfindung aufzubringende und zu fixierende "Folie" verwendet ist, so können in analoger Weise auch andere im Rahmen der Herstellung eines Faserverbundbauteils benötigte Flächengebilde (Folien) aufgebracht und fixiert werden. Als eine wie der beispielhaft beschriebene Klebefilm 12 im Faserverbundbauteil "zu verbauende" Komponente könnte als "Folie" insbesondere z. B. auch ein "Prepreg" (vorimprägniertes Fasermaterial-Halbzeug) vorgesehen sein.

Außerdem könnte abweichend vom beschriebenen Ausführungsbeispiel die Aufbringung und Fixierung der "Folie" auch an einer Oberfläche eines zur Herstellung des betreffenden Faserverbundbauteils eingesetzten Werkzeuges vorgesehen sein. Derartige in der Faserverbundtechnologie üblicherweise eingesetzte Werkzeuge sind in vielfältigen Gestaltungen aus dem Stand der Technik bekannt und bedürfen daher keiner näheren Erläuterung. Insbesondere fallen darunter Form- und Aushärtewerkzeuge zum endkonturnahen Formen bzw. (z. B. thermischen) Aushärten der zuvor im Werkzeug angeordneten ("drapierten") Komponenten des herzustellenden Faserverbundbauteils.

Dementsprechend kann mit dem erfindungsgemäßen Verfahren bzw. mit der erfindungsgemäßen Vorrichtung auch z. B. das insbesondere bei komplizierteren Formgestaltungen der betreffenden Werkzeugoberfläche manuell durchgeführte "Drapieren" (z. B. von flächigen Prepregs) erheblich vereinfacht werden.

Außerdem werden bei an sich bekannten Prozessen zur Herstellung von Faserverbundbauteilen oftmals "Funktionslagen" wie z. B. eine so genannte Vakuumfolie aus Kunststoff zum luftdichten Umschließen bzw. Abdecken von Komponenten des herzustellenden Faserverbundbauteils verwendet, um damit ein "vakuumunterstütztes" Kompaktieren bzw. Formen zu realisieren (gegebenenfalls auch noch druckunterstützt durch Einbringung eines solchen Vakuumaufbaus in einen Autoklaven).

Dementsprechend könnte gemäß dem in Fig. 1 veranschaulichten Verfahren anstelle des Klebefilms 12 auch eine luftdichte Vakuumfolie zum Abdecken von Faserverbundkomponenten (vgl. Bezugszahl 16 in Fig. 1) aufgebracht werden, die im weiteren Verlauf des Herstellungsprozesses (nach dem Aushärten) wieder entfernt wird.

Nochmals zurückkommend auf die mit Bezug auf Fig. 1 beschriebene Verarbeitung eines Klebefilms 12 durch Aufbringung und Fixierung desselben auf einer zur Bildung eines Faserverbundbauteils verwendeten Komponente wird nachfolgend mit Bezug auf die Fig. 2 und 3 ein spezielleres Anwendungsbeispiel dieser Klebefilmaufbringung beschrieben.

Bei der nachfolgenden Beschreibung dieses weiteren Ausführungsbeispiels werden für gleichwirkende Komponenten die gleichen Bezugszahlen verwendet, jeweils ergänzt durch einen kleinen Buchstaben "a" zur Unterscheidung der Ausführungsform. Dabei wird im Wesentlichen nur auf die Unterschiede zu dem bereits beschriebenen Ausführungsbeispiel eingegangen und im Übrigen hiermit ausdrücklich auf die Beschreibung des vorangegangenen Ausführungsbeispiels verwiesen.

Fig. 2 zeigt im mittleren Bereich die Unterseite eines Verstärkungsprofils 16a zur Verstärkung eines (nicht dargestellten) großflächigen platten- bzw. schalenförmigen Faserverbundbauteils. Oben und unten sind in Fig. 2 außerdem Klebefilmzuschnitte 12a dargestellt. Diese sind hinsichtlich ihrer Länge und Kontur bereits "vorkonfektioniert", um auf entsprechenden Fußbereichen 17a "passend" abgelegt und fixiert werden zu können.

Fig. 3 zeigt ein mit mehreren Verstärkungsprofilen 16a von Fig. 2 verstärktes plattenförmiges Faserverbundbauteil 16a'. Die jeweiligen Fußbereiche 17a der Verstärkungsprofile 16a sind jeweils über einen Klebefilm 12a an einer in Fig. 1 oberen Flachseite der Faserverbundplatte 16a' angebunden. Zur besseren Erkennbarkeit dieser Klebefilme 12a ist deren Dicke in Fig. 3 übertrieben groß dargestellt.

Zur Herstellung des in Fig. 3 gezeigten fertigen Produktes (verklebter Verbund aus Komponenten 16a' und 16a) werden die Fußbereiche mehrerer Verstärkungsprofile 16a der in Fig. 2 dargestellten Art mit (von der Kontur her) passend vorkonfektionierten Klebefilmzuschnitten 12a versehen, dann an der gewünschten (hier: oberen) Flachseite der Faserverbundplatte 16a' angeordnet und schließlich gemeinsam mit dieser Faserverbundplatte 16a' vollständig ausgehärtet (z. B. thermisch).

Das Aufbringen und Fixieren der einzelnen Klebefilmzuschnitte 12a an den Fußbereichen 17a der Verstärkungsprofile 16a kann vorteilhaft in der oben bereits beschriebenen Weise mit einem Fixieren durch eine elektrostatische Aufladung der Klebefilmzuschnitte 12a bewerkstelligt werden.

Falls dies automatisiert erfolgen soll, so könnte eine entsprechende Aufbring- und Fixiervorrichtung ("Tapeleger") mit einem geeigneten Vorrat an Folienzuschnitten 12a ausgestattet werden, von welchen in einem automatisierten Ablegeprozess die einzelnen Folienzuschnitte 12a auf die entsprechenden Fußbereichoberflächen abgelegt werden.

Denkbar ist hierbei auch die Verwendung einer Klebefilm-Vorratsrolle der mit Bezug auf die Fig. 1 bereits beschriebenen Art, wobei die Vorrichtung mit einer Schneideinrichtung ausgestattet ist, um während des Betriebs ein Konfektionieren von Folienzuschnitten hinsichtlich deren Länge und gegebenenfalls auch hinsichtlich deren Kontur durchzuführen.

Insbesondere falls die einzelnen Folienzuschnitte 12a nicht besonders lang sind (z. B. maximal etwa 1 bis 2 m) kommt in Betracht, das Ablegen der Folienzuschnitte 12a und gegebenenfalls auch das Fixieren mittels elektrostatischer Aufladung manuell durchzuführen.

Ein manuelles Fixieren im Rahmen des hier beschriebenen Aufbring- und Fixierverfahrens kann z. B. unter Verwendung einer manuell handhabbaren Fixiereinrichtung vorgesehen sein, welche eine Hochspannungsquelle zur Erzeugung der gewünschten Aufladespannung und eine über eine elektrische Leitungsverbindung damit verbundene Aufladeinheit zur Übertragung der elektrischen Ladung auf den jeweiligen Klebefilmzuschnitt (bzw. allgemein auf die betreffende "Folie") umfasst.

Die Aufladeeinheit kann wie für die in Fig. 1 dargestellte vollautomatisierte Vorrichtung 10 eine kamm- oder bürstenartige Leiterenden- bzw. Leiterspitzenanordnung aufweisen, welche durch entsprechende manuelle Führung der Aufladeeinheit in direktem Kontakt oder in geringem Abstand über den jeweils aufzuladenden Folienabschnitt gehalten oder bewegt wird.

## Patentansprüche

1. Verfahren zur Herstellung eines Faserverbundbauteils (16a, 12a, 16a'), umfassend die Schritte:
- Aufbringen und Fixieren eines Klebefilms (12a) an einer Oberfläche einer ersten zur Bildung des Faserverbundbauteils (16a, 12a, 16a') verwendeten Faserverbundkomponente (16a), wobei das Fixieren durch eine elektrostatische Aufladung des Klebefilms (12a) bewerkstelligt wird,
- Aufbringen der mit dem Klebefilm (12a) versehenen ersten Faserverbundkomponente (16a) auf eine zweite zur Bildung des Faserverbundbauteils (16a, 12a, 16a') verwendete Faserverbundkomponente (16a'),
- Aushärten der ersten Faserverbundkomponente (16a) und der zweiten Faserverbundkomponente (16a'), wobei die beiden Faserverbundkomponenten (16a, 16a') mittels des ebenfalls aushärtenden Klebefilms (12a) fest miteinander verbunden werden.

2. Verfahren nach Anspruch 1, wobei sukzessive Abschnitte des Klebefilms (12) auf die Oberfläche (14) abgelegt werden und die jeweils abgelegten Abschnitte (12-3) an der Oberfläche (14) fixiert werden.

3. Verfahren nach Anspruch 1 oder 2, wobei die erste Faserverbundkomponente (16a) ein zur Herstellung eines verstärkten Rumpfschalenteils (16a, 12a, 16a') verwendetes Verstärkungsprofil und die zweite Faserverbundkomponente (16a') ein zur Herstellung des verstärkten Rumpfschalenteils (16a, 12a, 16a') verwendetes Schalenbauteil ist.

4. Verfahren nach einem der vorangehenden Ansprüche, wobei die Oberfläche (14) eine nicht-abwickelbare Formgestaltung besitzt.

5. Verfahren nach einem der vorangehenden Ansprüche, wobei der auf die Oberfläche (14) abzulegende Klebefilm (12) von einer Vorratsrolle (20) abgezogen wird.

6. Verfahren nach einem der vorangehenden Ansprüche, wobei der auf die Oberfläche (14) abzulegende Klebefilm (12) ein vorkonfektionierter Folienzuschnitt ist.

7. Verfahren nach einem der vorangehenden Ansprüche, wobei der auf die Oberfläche (14) abzulegende Klebefilm (12) langgestreckt ist, insbesondere mit einem Länge/Breite-Verhältnis von mindestens 10/1.

8. Verfahren nach einem der vorangehenden Ansprüche, wobei die elektrostatische Aufladung von jeweiligen Klebefilmabschnitten (12-1, 12-2) vor deren Ablage auf die Oberfläche (14) erfolgt.

9. Verfahren nach einem der vorangehenden Ansprüche, wobei die elektrostatische Aufladung von jeweiligen Klebefilmabschnitten (12-3) nach deren Ablage auf die Oberfläche (14) erfolgt.

10. Verfahren nach einem der vorangehenden Ansprüche, wobei zum Bedecken der Oberfläche (14) der ersten Faserverbundkomponente (16) mehrere Klebefilme (12) an der Oberfläche (14) aufgebracht und durch eine elektrostatische Aufladung fixiert werden.

## Claims

1. A method of manufacturing a fiber composite assembly (16a, 12a, 16a'), comprising the steps of:
- applying and fixing of an adhesive film (12a) on a surface of a first fiber composite component (16a) used for the creation of the fiber composite assembly (16a, 12a, 16a'), wherein the fixing is accomplished by electrostatically charging the adhesive film (12a),
- Applying of the first fiber composite component (16a) provided with the adhesive film (12a) on a second fiber composite component (16a') used for the creation of the fiber composite assembly (16a, 12a, 16a'),
- Curing the first fiber composite component (16a) and the second fiber composite component (16a'), wherein the two fiber composite components (16a, 16a') are joined together by means of the likewise curing adhesive film (12a).

2. The method according to claim 1, wherein successive sections of the adhesive film (12) are placed on the surface (14) and the respective placed sections (12-3) are fixed to the surface (14).

3. The method according to claim 1 or 2, wherein the first fiber composite component (16a) is a reinforcing profile used for the production of a reinforced hull shell member (16a, 12a, 16a') and the second fiber composite component (16a') is a shell member used for the production of the reinforced hull shell member (16a, 12a, 16a').

4. The method according to one of the preceding claims, wherein the surface (14) has a non-unwindable design.

5. The method according to one of the preceding claims, wherein the adhesive film (12) to be placed on the surface (14) is peeled off from a supply roll (20).

6. The method according to one of the preceding claims, wherein the adhesive film (12) to be placed on the surface (14) is a prefabricated film cutting.

7. The method according to one of the preceding claims, wherein the adhesive film (12) to be placed on the surface (14) is elongated, in particular with a length/width ratio of at least 10/1.

8. The method according to one of the preceding claims, wherein the electrostatic charging of respective adhesive film sections (12-1, 12-2) occurs prior to their placing on the surface (14).

9. The method according to one of the preceding claims, wherein the electrostatic charging of respective adhesive film sections (12-3) occurs after their placing on the surface (14).

10. The method according to one of the preceding claims, wherein for covering the surface (14) of the first fiber composite component (16), multiple adhesive films (12) are applied to the surface (14) and fixed by electrostatically charging them.

## Revendications

1. Procédé de fabrication d'un composant en fibres composite (16a, 12a, 16a') comprenant les étapes suivantes:
- Application et fixation d'un film adhésif (12a) sur une surface d'un premier part en fibres composite (16a) utilisé pour former ledit composant composite en fibres (16a, 12a, 16a'), dans lequel ladite fixation est réalisée en chargeant électrostatiquement ledit film adhésif (12a),
- Application du premier part en fibre composite (16a) muni du film adhésif (12a) sur un second part composite en fibres (16a') utilisé pour former le composant en fibre composite (16a, 12a, 16a'),
- Durcissement du premier part en fibres composite (16a) et du deuxième part en fibres composite (16a'), dans lequel les deux parts en fibres composites (16a, 16a') étant solidement assemblés au moyen du film adhésif (12a) également durcissant.

2. Le procédé selon la revendication 1, dans lequel des sections successives du film adhésif (12) sont déposées sur la surface (14) et les sections déposées respectives (12-3) sont fixées à la surface (14).

3. Le procédé selon la revendication 1 ou 2, dans lequel le premier part en fibres composite (16a) est un profilé de renforcement utilisé pour produire un élément de coque renforcé (16a, 12a, 16a') et le second part en fibres composite (16a') est un élément de coque utilisé pour produire l'élément de coque renforcé (16a, 12a, 16a').

4. Le procédé selon l'une des revendications précédentes, dans lequel la surface (14) a une forme non enroulable.

5. Le procédé selon l'une des revendications précédentes, dans lequel le film adhésif (12) à déposer sur la surface (14) est détaché d'un rouleau de réserve (20).

6. Le procédé selon l'une des revendications précédentes, dans lequel le film adhésif (12) à déposer sur la surface (14) est un flan de film préfabriqué.

7. Le procédé selon l'une des revendications précédentes, dans lequel le film adhésif (12) à déposer sur la surface (14) est allongé, en particulier avec un rapport longueur/largeur d'au moins 10/1.

8. Le procédé selon l'une des revendications précédentes, dans lequel la charge électrostatique des sections de film adhésif respectives (12-1, 12-2) est effectuée avant leur dépôt sur la surface (14).

9. Le procédé selon l'une des revendications précédentes, dans lequel la charge électrostatique des sections de film adhésif respectives (12-3) est effectuée après leur dépôt sur la surface (14).

10. Le procédé selon l'une des revendications précédentes, dans lequel, pour recouvrir la surface (14) du premier part en fibres composite (16), une pluralité de films adhésifs (12) sont appliqués sur la surface (14) et fixés au moyen d'une charge électrostatique.
